# EUROPEAN PATENT APPLICATION

(11) **EP 3 770 060 A1**
(43) Date of publication of application: **27.01.2021**
(21) Application number: 19771357.1
(22) Date of filing: 15.02.2019
(51) Int. Cl.: B63H 21/17, B63H 21/20, B63H 21/21, B63J 99/00

(54) **SHIP PROPULSION SYSTEM**

(30) Priority: 19.03.2018 JP 2018051711
(71) Applicant: Current Dynamics Incorporated, Osaka-shi, Osaka 558-0022 (JP)
(72) Inventor: MORI Kazuhiko, Musashino-shi, Tokyo 180-0013 (JP)
(74) Representative: SSM Sandmair
(86) International application number: PCT/JP2019/005470
(87) International publication number: WO 2019/181301

(57) **Abstract**

A system that consists of electric-powered ship propulsion system in which a hydrogen-fueled fuel cell vehicle is installed on a ship and the electricity generated by the hydrogen on board the vehicle is used to drive an electric ship propulsion vessel. An internal combustion engine vehicle (ICE) fueled by hydrogen, natural gas or LPG is installed on board a ship, and the hydrogen, natural gas or LPG fueled internal combustion engine is used to propel the ship. These methods are used to provide a system that enhances convenience while supplying and transporting the vehicle to the ship at a low cost. Also, by connecting the same power from the tire drive unit of the vehicle mounted on the vessel directly to the propulsion drive unit of the vessel, the system provides the vessel with propulsion to navigate. These methods provide an outstanding advanced ship with low cost by supplying the superior feature of vehicles on land. Each of the above three methods is characterized by the imparting of energy from an automobile side drive source mounted on the automobile, or direct power transfer from the automobile side drive source to drive a ship propulsion propeller or jet propulsion pump on the ship side. If the vehicle is a fuel cell vehicle using hydrogen, the electric power generated by the vehicle is used to propel the ship. In the case where the vehicle is equipped with an internal-combustion engine vehicle fueled by hydrogen, natural gas, or LPG, the fuel is used directly as fuel for the internal-combustion engine propulsion ship. Another type of propulsion system is also available, such as a ship propulsion system in which electric vehicles, hybrid vehicles, or plug-in hybrid vehicles are mounted on a ship and the ship is driven by the electric energy generated or stored by the vehicle or by the mechanical rotation of the vehicle's tires.

## Description

### Background of the Invention

### Field of the Invention

The present invention relates to a ship propulsion system to give driving force to the ship which automobiles such as fuel cell vehicles, and the like are put on. This application insists on a priority based on Japanese patent application number, Japanese Patent Application No. 2018-051711 filed on March 19, 2018 in Japan, and this application is incorporated herein by reference by being referred.

### Description of Related Art

Fuel cell systems that use hydrogen as a fuel are widely used as an extremely environmentally friendly electric power generation system because they produce only water vapor as exhaust gas by combustion to secure propulsion, and there is almost no mechanical vibration, and fuel cell vehicles equipped with fuel cells have been developed to drive automobiles. In recent years, fuel cell powered ships have been developed to meet the emission control regulations and the demand for environmentally friendly ship propulsion systems using superior fuels, so fuel cell powered ships are being developed.

According to the cited patent document 1, a fuel tank for storing fuel supplied to a fuel cell is disposed outside the hull of a fuel cell ship, in order to improve comfort in the hull of the fuel cell ship, which navigates using a fuel cell as a power source. On the other hand, patent document 2 discloses a method of suppressing the sound of the motor drive as noise in the hull of the ship. In other words, it discloses a method in which a fuel tank supplying a fuel cell is arranged to cover the motor.
Patent Literature 1: JP 2015-196410
Patent Literature 2: JP 2015-196411

### Summary of the Invention

The energy per volume of hydrogen in the gaseous state is lower than that of petroleum such as diesel oil, even when compressed to 700 atmospheres. Therefore, it is necessary to install a large number of hydrogen supply stations at high pressure at the quay of the ship in order to spread the fuel cell system using hydrogen as a fuel for ships. On the other hand, when solid or liquid hydrogen is used as a fuel, it is relatively easy to transport and store it as a fuel, but there are many technical and economical problems in terms of the method of converting hydrogen into gaseous hydrogen and the cost of the container, which have not been established.

The hydrogen fueled marine propulsion system has been hampering the spread of the system because of the risk of falling a high-pressure cylinder filled with gaseous hydrogen during the bunkering onto a ship. In the case of the ship propulsion system using hydrogen as a fuel, the supply and transportation of hydrogen to the ship is a major issue to spread the fuel cell propulsion system. In other words, low cost, safety and high convenience in bunkering hydrogen to and transporting hydrogen to ships is desired for the ship propulsion system.

The present invention has been made in view of the above-mentioned problems, and it is intended to provide a new and excellent ship propulsion system that can supply and transport energy sources such as hydrogen and other energy sources to a ship at a low cost and increase the convenience of the system.

One aspect of the present invention is a ship propulsion system for loading an automobile on a ship and imparting propulsive power to the ship using fuel mounted on the automobile. The system comprises a ship-side drive unit provided on the ship, which generates a driving force by means of a rotation drive, and a ship propulsion propeller or a jet propulsion pump, to which the driving force generated by the ship-side drive unit is transmitted to impart the propulsive force to the ship. The ship-side drive unit is characterized in that the ship propulsion propeller is driven by imparting energy from an automobile-side drive source mounted on the automobile or by power transmission from the automobile-side drive source.

According to one aspect of the present invention, a ship propulsion propeller or a jet propulsion pump is driven via a ship-side drive unit mounted on a ship by imparting energy from the vehicle-side drive unit mounted on the vehicle or by transmitting power from the vehicle-side drive unit to drive the ship propulsion propeller or jet propulsion pump via the ship-side drive unit mounted on the ship, thereby eliminating the need to directly bunk the ship with hydrogen gas or mount a hydrogen gas-filled tank at a quay.

In one aspect of the present invention, said vehicle is a fuel cell vehicle equipped with a fuel cell, wherein the energy source driving said fuel cell vehicle is fuel cell vehicle-mounted hydrogen. Said power generated from the fuel cell of the fuel cell vehicle is supplied to the ship-side drive unit, and said ship is provided with a ship propulsion motor that rotates and drives the ship propulsion propeller, and a ship propulsion motor controller that controls the rotational drive operation of the ship propulsion motor, wherein said ship propulsion motor controller. The motor controller for ship propulsion may be configured to directly use the electrical energy generated by the fuel cells mounted on the fuel cell vehicle.

In this way, the ship can be propelled using the electric power generated by the fuel cells of the fuel cell vehicle onboard the ship as an energy source, thus eliminating the need to directly fill the ship with hydrogen gas or bunk the hydrogen tank with hydrogen gas.

In one aspect of the present invention, the vehicle is an electric vehicle having a storage battery, or a hybrid vehicle, or a plug-in hybrid vehicle, and the ship is equipped with a ship propulsion motor, a ship propulsion motor controller that controls the rotational drive operation of the ship propulsion motor. The electric energy stored in the storage batteries of the electric vehicle, hybrid vehicle or plug-in hybrid vehicle may be supplied to the ship to drive the ship as an electric-powered ship.

In this way, the electric power generated from the storage batteries of electric vehicles, hybrids or plug-in hybrids on board a ship can be used as an energy source to propel the ship, ensuring that a large amount of power needed to propel the ship can be secured without the need for quay charging facilities.

In one aspect of the present invention, an inverter for auxiliary equipment, which serves as an auxiliary power source for voltage conversion of power generated from the fuel cell vehicle or electric vehicle or hybrid vehicle or plug-in hybrid vehicle-mounted power, may be provided on the ship between the vehicle and the motor controller for ship propulsion.

In this way, the high-voltage power generated from a fuel cell or other device installed in the vehicle can be converted into low-voltage power for ship control.

In one aspect of the invention, a DC-AC inverter that converts the power generated from the fuel cell vehicle or the power generated by the fuel cell vehicle or the power on board the electric vehicle or the hybrid vehicle or the plug-in hybrid vehicle from direct current to alternating current and an AC-DC converter that converts the power converted to alternating current to direct current may be further provided between the vehicle and the motor controller for ship propulsion.

In this way, the ship can be easily propelled using devices such as a V2H (vehicle to home) system power supply that extracts household AC power from the DC power of the electric vehicle without the need to modify the fuel cell vehicle or other equipment on board the ship.

In one aspect of the present invention, the ship further comprises a storage battery for storing said electric power supplied from the fuel cell vehicle, a storage battery voltage detector for detecting the voltage of the storage battery, and a relay unit for charging control that is operated based on the result of the detection of the storage battery voltage detector, and may be configured to enable propulsion of the ship by the marine propulsion motor even with the electric power stored in the storage battery after charging by the fuel cell vehicle.

In this way, the storage batteries on board the ship can also be used as a power source, enabling a more stable supply of power to the ship-side drive unit and ensuring that the storage batteries are charged via repeated loading of the fuel cell vehicle, thus ensuring that a large amount of power is available effectively for the long-term propulsion of the ship.

In one aspect of the invention, the vehicle is a fuel cell vehicle or a natural gas vehicle or a LPG vehicle, and the ship-side drive unit is an internal combustion engine mounted on the ship, wherein the internal combustion engine may be fueled by hydrogen in the fuel cell vehicle or natural gas in the natural gas vehicle or LPG in the LPG vehicle to drive the ship propulsion propeller or the jet propulsion pump.

This eliminates the need to fill up the shipboard fuel tanks with hydrogen, natural gas, or LPG, which are not easy to fill up, as well as the need for the shipboard fuel tanks themselves.

In one aspect of the present invention, said internal combustion engine may be a gaseous (gas) engine fueled by hydrogen, natural gas, and LPG, and the hydrogen, natural gas, and LPG may be mixed with liquid fuels such as gasoline, diesel oil, heavy oil, or other liquid fuels aboard said ship.

In this way, a ship propulsion system with a low environmental impact gas-fueled engine can be configured without the complexities of filling it up.

In one aspect of the invention, the vehicle is an electric vehicle or a hybrid vehicle, or a plug-in hybrid vehicle, or a fuel cell vehicle, wherein the vehicle-side drive source is an electric motor, and the ship-side drive unit is a ship propulsion motor that rotates and drives the ship propulsion propeller, and the electric vehicle or hybrid vehicle, or plug-in hybrid vehicle, or fuel cell vehicle, and a motor controller for ship propulsion, wherein power stored in the hybrid vehicle or plug-in hybrid vehicle or fuel cell vehicle is supplied to control the rotational drive operation of the motor for ship propulsion, the motor controller for ship propulsion. The system may be configured to be connected directly to an electrical energy source generated or stored in a plug-in hybrid vehicle or a fuel cell vehicle, as DC or converted from DC to AC.

In this way, the power needed to propel the ship can be ensured by directly using the electric power from the storage batteries stored in electric or hybrid or plug-in hybrid vehicles or fuel cell vehicles.

In one aspect of the present invention, the automobile may be an automobile in which the automobile-side drive source is either an electric motor or a liquid fuel engine, and the ship-side drive may be a power transmission mechanism that transmits the rotational force of the tires of the automobile directly to the ship propulsion propeller.

In this way, the rotational force of the tires of the vehicle loaded on the ship via the power transmission mechanism can directly drive the ship's marine propulsion propeller in a rotating manner, thus ensuring propulsion of the ship.

In one aspect of the invention, the ship may be further provided with a remote-control function for remotely controlling the motor and the steering, and an actuator for operating the steering by the remote-control function may be configured to be mounted on the vehicle.

In this way, a cabin of automobile loaded on the ship can be used as the ship's wheelhouse, and the ship's engine and steering can be controlled remotely by the remote-control unit, making effective use of the space of the on-board fuel cell vehicle and the automobile's air conditioning and navigation equipment.

As explained above, according to the present invention, the ship can be directly propelled by an energy source of an automobile such as a fuel cell vehicle loaded on the ship or a drive source on the automobile-side. Accordingly, this eliminates the need for equipment and work to bunker natural gas, LPG or hydrogen gas into the ship and to load tanks filled with gas.

### Brief Description of the Drawings

FIGS. 1A through 1D are illustration diagrams showing a schematic configuration of a ship propulsion system and a method of loading a vehicle in accordance with one embodiment of the present invention.
FIG. 2 is a block diagram illustrating a functional configuration of a ship propulsion system in accordance with one embodiment of the present invention.
FIG. 3 is a block diagram illustrating a functional configuration of a variant of a ship propulsion system in accordance with one embodiment of the present invention.
FIG. 4 is a block diagram illustrating a functional configuration of another variant of a ship propulsion system in accordance with an embodiment of the present invention.
FIG. 5 is a block diagram illustrating a functional configuration of a ship propulsion system in accordance with another embodiment of the present invention.
FIG. 6A is a plan view showing a schematic configuration of a ship propulsion system according to yet another embodiment of the present invention, and FIG. 6B is a front view showing a schematic configuration of a ship propulsion system according to yet another embodiment of the present invention.
FIG. 7 is a block diagram illustrating a functional configuration of the ship propulsion system according to yet another embodiment of the present invention.
FIG. 8 is a block diagram illustrating a functional configuration of a ship propulsion system pertaining to yet another embodiment of the present invention.
FIG. 9 is a block diagram illustrating a functional configuration of a ship propulsion system pertaining to yet another embodiment of the present invention.

### Detailed Description of the Invention

A suitable embodiment of the present invention will be described in detail below. The embodiments described below do not unreasonably limit the contents of the invention as described in the claims, and not all of the configurations described in the embodiments may be essential to the solution of the invention.

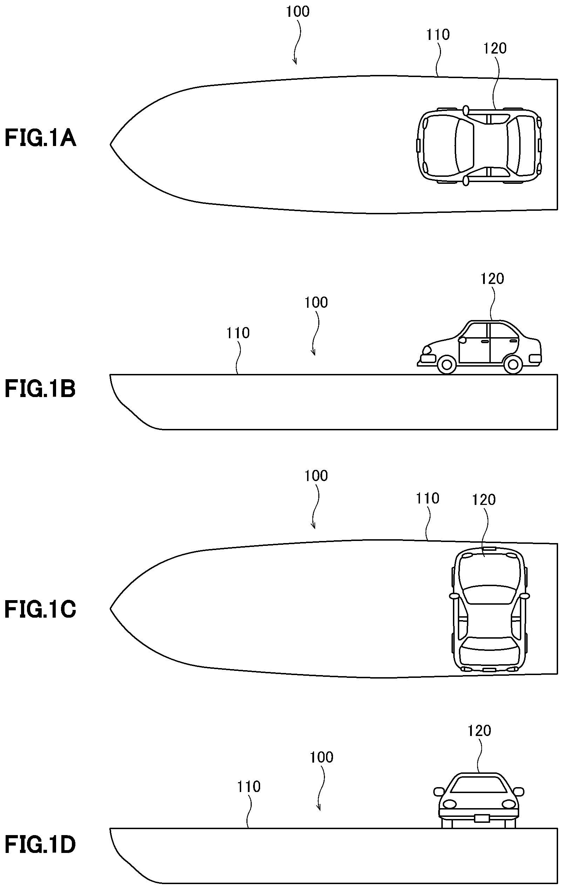

First, a schematic configuration of the ship propulsion system in accordance with one embodiment of the present invention will be described with the use of the drawings. FIGS. 1A through 1D illustrate a schematic configuration of a ship propulsion system and a method of loading a vehicle in accordance with one embodiment of the present invention.

The ship propulsion system 100 according to one embodiment of the present invention is a method of providing propulsion to a ship 110 equipped with a fuel cell vehicle or a natural gas vehicle, a natural gas vehicle, an LPG vehicle, or an electric vehicle 120 described below, as a method of providing propulsion to a ship 110 equipped with a fuel cell vehicle or a natural gas vehicle, an LPG vehicle, or an electric vehicle 120. It is characterized in that the energy source of the vehicle 120 is used to propel the ship 110. That is, the ship propulsion system 100 of one embodiment of the present invention is characterized in that a vehicle 120 filled with hydrogen or natural gas or LPG is mounted on the ship 110 on land, and the electric power generated by the hydrogen in the vehicle 120 or the natural gas or LPG fuel is used as propulsion power for the ship 110. Alternatively, the system is designed to drive the vessel 110 with an internal combustion engine for liquid fuels, such as gasoline, diesel, heavy oil, etc., mounted on the vessel 110, by mixing the fuel with the gas fuels mounted on the vehicle or by operating the internal combustion engine mounted on the vessel with gas fuel alone. In this embodiment, as shown in FIGS. 1A and 1B, the vehicle 120 is loaded on the ship 110 along the length direction (longitudinal direction) of the ship 110, or as shown in FIGS. 1C and ID, the vehicle 120 is loaded on the ship 110 along the width direction (horizontal direction) of the ship 110. The vehicle mounting method described herein is an example only, and the embodiments thereof do not unreasonably limit the contents of the invention as described in the claims.

In this embodiment, the fuel cell vehicle or natural gas vehicle or LPG vehicle 120 is loaded onto the deck of the ship 110 in any direction by self-propulsion of the fuel cell vehicle or natural gas vehicle or LPG vehicle 120, or by moving the vehicle 120 onto the hull of the ship 110 by a crane. If the hull of the ship is relatively large, the fuel cell vehicle or the natural gas vehicle or the LPG vehicle 120 are loaded onto the ship 110 by self-propulsion of the fuel cell vehicle or the natural gas vehicle or the LPG vehicle 120. On the other hand, if the hull of the ship 110 is relatively small compared with the fuel cell vehicle or natural gas vehicle or LPG vehicle 120, the fuel cell vehicle or natural gas vehicle 120 is loaded directly onto the deck of the ship 110 by a crane to avoid the danger of the other side of the hull of the ship 110 being lifted up.

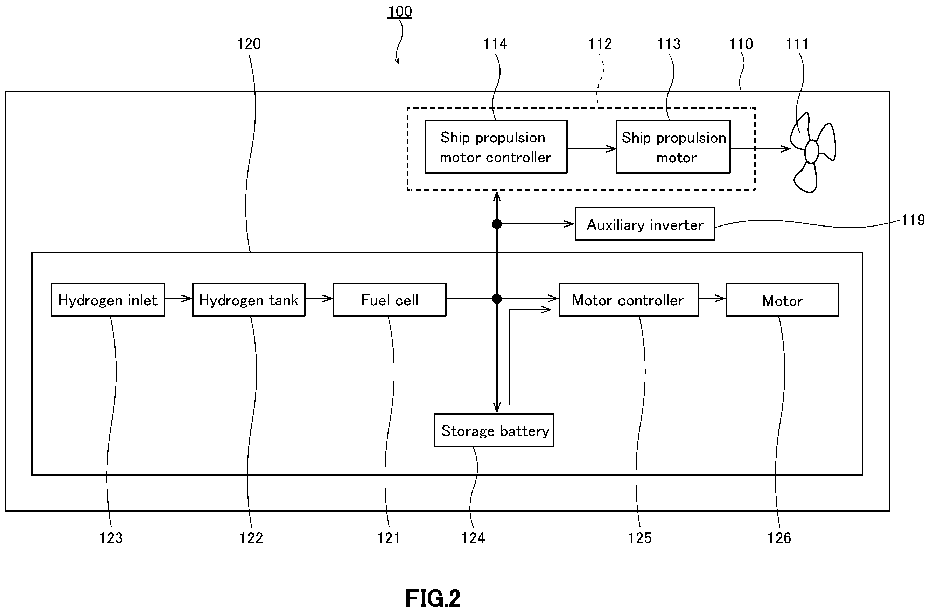

The functional configuration of the ship propulsion system according to one embodiment of the present invention will be described with the use of the drawings. FIG. 2 is a block diagram illustrating the functional configuration of the ship propulsion system in accordance with one embodiment of the present invention. FIG. 2 is illustrated using the case of a fuel cell vehicle as an example.

The ship propulsion system 100 according to one embodiment of the present invention is characterized in imparting propulsion power to the ship 110 on which the fuel cell vehicle 120 is loaded. The power generated from the fuel cell 121 of the fuel cell vehicle 120 loaded on the ship 110 is used as an energy source for imparting propulsion power to the ship 110. That is, in this embodiment, a fuel cell vehicle 120 filled with hydrogen at a land-based hydrogen supply station is loaded on the ship 110, and the power generated from the fuel cell 121 by the hydrogen mounted on the fuel cell vehicle 120 is used as the driving power of the ship 110, as well as the power generated by the fuel cell 121 for the auxiliary equipment installed on the ship 110. It is characterized by the provision of auxiliary power such as control power via the inverter 119.

The ship 110 is provided with a ship propulsion propeller 111, which impart a propulsive force to the ship 110 by transferring the driving force generated by the ship-side drive 112 and a ship-side drive 112, which impart a rotational driving force to the ship propulsion propeller 111 by generating a driving force by the rotational drive. A jet propulsion pump may be used in place of the ship propulsion propeller. In this embodiment, the ship propulsion system 100 is imparted with propulsion power of the ship 110 by power generated by the fuel cell 121 by the hydrogen fuel on the fuel cell vehicle 120.

The ship-side drive unit 112 is provided with a ship propulsion motor 113 that rotates and drives the ship propulsion propeller 111, and a ship propulsion motor controller 114 that controls the rotational drive operation of the ship propulsion motor 113 by being supplied with power generated from the fuel cell 121. This allows the motor controller 114 for ship propulsion to operate by power generated from the fuel cell 121 mounted on the fuel cell vehicle 120. In this embodiment, the electrical connection between the ship 110 and the fuel cell vehicle 120 is made, for example, by feeding power to the ship 110 from a terminal for connection via a DC to AC power converter by the fuel cell vehicle 120 or an undescribed inverter provided in the ship again, or by an undescribed terminal provided in the ship 110 for taking DC power directly from the fuel cell 121 mounted in the fuel cell vehicle 120.

The fuel cell vehicle 120, which is installed on the ship 110, has a fuel cell 121, a hydrogen tank 122, a hydrogen inlet 123, a storage battery 124, a motor controller 125, and a motor 126, as shown in FIG. 2. In the fuel cell vehicle 120, hydrogen is filled from the hydrogen inlet 123 to the hydrogen tank 122 at a hydrogen supply station on land so that the hydrogen is compressed to a high pressure of about 700 atmospheres.

The fuel cell vehicle 120 normally generates electric power when hydrogen supplied from the hydrogen tank 122 and oxygen in the air react with the fuel cell 121, and by supplying the electric power to the motor controller 125, the motor controller 125 drives the motor 126, which is the automobile-side drive source of the fuel cell vehicle 120. The vehicle is made to run on wheels. In the ship propulsion system 100 according to one embodiment of the present invention, a fuel cell vehicle 120 is loaded and the power generated by the fuel cell 121 is supplied to the ship propulsion motor controller 114 and the ship propulsion motor 113 mounted on the ship 110 to drive the rotation of the ship propeller 111, so that the ship 110 runs as a fuel cell ship. The ship propulsion motor controller 114 and the ship propulsion motor 113, which are mounted on the ship 110 and used for electric power propulsion, may each have more than one motor for ship propulsion. A jet propulsion pump may be used in place of the ship propulsion propeller.

In this embodiment, part of the power generated by the fuel cell 121 loaded on the ship is stored in a storage battery 124 mounted in the vehicle, which can also be used to drive the ship propulsion motor controller 114 and the ship propulsion motor 113 mounted on the ship 110 to drive the ship propulsion propeller 111. In the fuel cell vehicle 120, the power for driving the motor 126 is generated by the on-board fuel cell 121, which drives the motor 126 and stores some of the energy in a storage battery 124 mounted on the fuel cell vehicle. In this embodiment, the electrical energy in the storage battery 124 in the fuel cell vehicle loaded on the ship can also be used to propel the ship 110. Between the hydrogen tank 122 and the fuel cell 121, an undescribed pressure regulator is provided between the hydrogen tank 122 and the fuel cell 121 to depressurize the high-pressure hydrogen in the hydrogen tank 122.

In the present embodiment, for example, it is necessary to convert the relatively high-voltage high-power electricity for driving the vehicle to relatively low-voltage power for use in the radio and thrusters for changing the direction of the ship in the ship 110. This means that an auxiliary power supply for the ship may be necessary to use the required power other than the drive power of the ship 110. In this embodiment, an inverter 119 for auxiliary power is provided between the fuel cell 121 and the motor controller 114 for ship propulsion.

Thus, in the present embodiment, when the ship 110 equipped with the fuel cell vehicle 120 is underway, it is possible to generate electricity by the fuel cell 121 mounted on the fuel cell vehicle 120 and also receive charging and discharging electrical energy stored in the storage battery 124 mounted on the fuel cell vehicle 120. The electric marine propulsion motor 113 is then driven via the marine propulsion motor controller 114 mounted on the ship 110 and propelled by the marine propulsion propeller 111.

Conventional fuel cell ships have required expensive hydrogen charging stations and dangerous loading operations of hydrogen gas tanks in order to supply the ships with hydrogen gas at the quay. According to the present invention, the work of filling the ship 110 with hydrogen gas and loading the hydrogen tank, which serves as a fuel tank filled with hydrogen, is no longer necessary to secure hydrogen fuel for the fuel cell ship. Supplying and transporting the hydrogen to the ship 110 becomes low cost and also increases convenience. In this embodiment, when the hydrogen is nearly used up by the navigation of the ship 110, the fuel cell vehicle 120 is disembarked and hydrogen is filled at a hydrogen charging station on land. The propulsive drive of the ship 110 can be repeated by bringing said fuel cell vehicle 120 up to the ship 110 again. The present invention provides the same advantages when the ship is operated with natural gas or LPG instead of hydrogen.

In the ship propulsion system 100 of one embodiment of the present invention, an electric vehicle or a hybrid vehicle having a storage battery or a plug-in hybrid vehicle can also be used as the vehicle 120. In this case, as described above, the power stored in the storage battery 124 can also be supplied to the ship propulsion motor controller 114 and the ship propulsion motor 113 loaded on the ship 110 for use in driving the ship propulsion propeller 111, as described above. In the case of electric or hybrid or plug-in hybrid vehicles, the fuel cell 121, hydrogen tank 122, and hydrogen inlet 123 are not necessary in FIG. 2, and the replacement of the fuel cell 121, hydrogen tank 122, and hydrogen inlet 123 with a gasoline inlet, gasoline tank, and a charging mechanism by a gasoline engine is not needless to say.

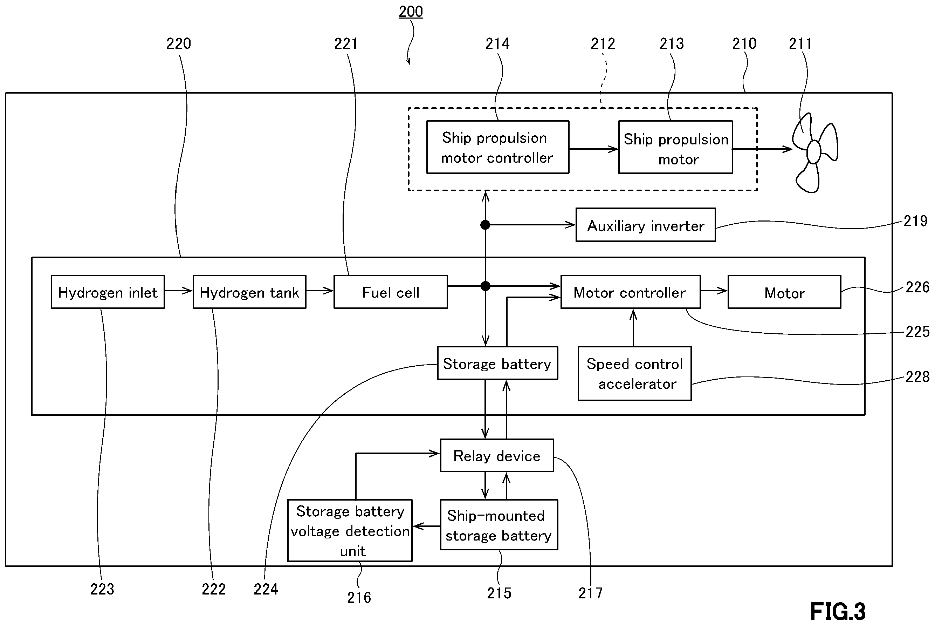

In addition to the fuel cells 121 and storage batteries 124 mounted on the fuel cell vehicle 120, the ship propulsion system 100 according to one embodiment of the present invention may be further equipped with storage batteries on the ship 110 to enable more stable ship propulsion. A variant of the ship propulsion system 100 according to one embodiment of the present invention will be described below, using the drawings. FIG. 3 is a block diagram illustrating a functional configuration of a variant example of the ship propulsion system according to one embodiment of the present invention.

In the ship propulsion system 200 of the present embodiment, as shown in FIG. 3, the ship 210 has a ship-mounted storage battery 215 that serves as a storage battery for storing electric power supplied from the fuel cell 221, a storage battery voltage detection unit 216 that detects the voltage of said ship-mounted storage battery 215, a storage battery voltage detection unit 216 that detects the voltage of the storage battery voltage detection unit 216, a storage battery voltage detection unit 216 that detects the voltage of said storage battery 215, and a storage battery voltage detection unit 216 that detects the voltage of the fuel cell 221. A relay device 217 is provided which is operated based on the results. Therefore, the motor controller 214 for ship propulsion can be operated with power stored in the ship-mounted storage battery 215. As a result, the storage battery 215 on board the ship 210 can also be used as a power source, thus enabling a more stable power supply to the ship-side drive unit 212.

In this embodiment, the motor controller 225 for driving the motor 226 provided by the fuel cell vehicle 220 may be used to drive the motor 213 for ship propulsion without using the motor controller 214 for ship propulsion. The ship speed control may be performed by operating the speed control accelerator 228 provided by the fuel cell vehicle 220.

When the motor controller 214 for ship propulsion mounted on the fuel cell vehicle 210 is used, the automatic charge quantity control device not shown in the fuel cell vehicle 220 allows the storage batteries 224 mounted on the fuel cell vehicle 220 and the storage batteries 215 mounted on the ship 210 to be charged at will while at sea or at anchor. In that case, when the storage batteries 224 mounted on the fuel cell vehicle 220 and the storage batteries 215 mounted on the ship 210 is fully charged, the charging circuit is cut off to prevent overcharging and double protect the storage batteries 215. The storage battery voltage detecting unit 216 and the relay device 217 for charging control may be operated by the voltage.

The configuration and action of the ship propulsion propeller 211, the ship-side drive 212, the inverter for auxiliary engines 219, and the other components of the fuel cell vehicle 220 in the ship propulsion system 200 in one variant of the present embodiment are the same as those in the ship propulsion system 100 in one embodiment of the present invention, so the explanation of this is omitted.

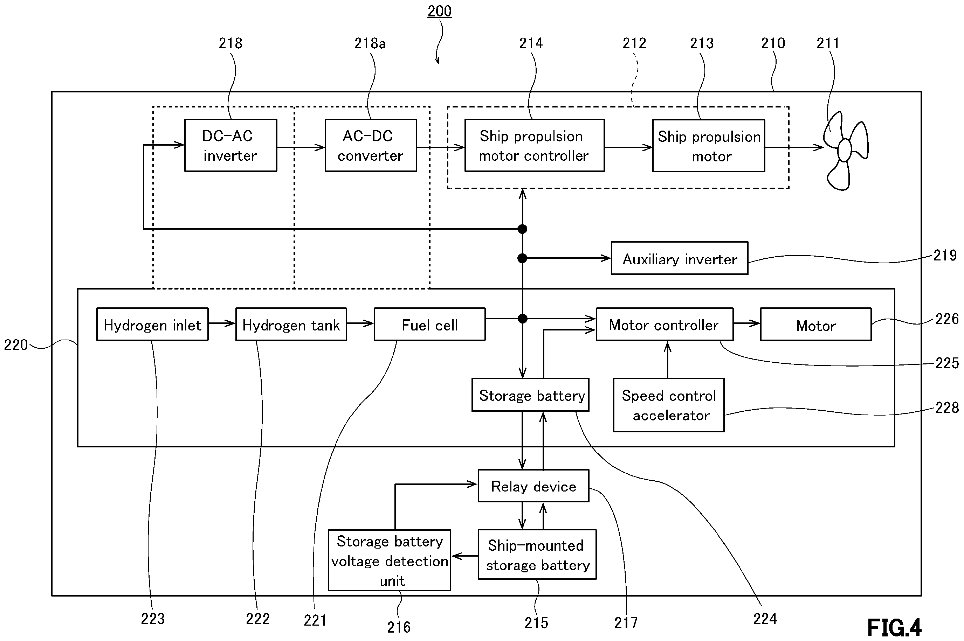

In the ship propulsion system 200 in one variant of the present embodiment, as shown in FIG. 4, a DC-AC inverter 218 that converts the DC power generated from the fuel cell 221 to AC may be provided between the fuel cell 221 of the fuel cell vehicle 220 and the motor controller 214 for ship propulsion, as shown in. And an AC-DC converter 218a, which converts the AC power to DC, may be further provided. This configuration makes it possible to use a general-purpose inverter device, such as a V2H (vehicle to home) system power supply, to obtain household AC power from the fuel cell vehicle 220. By converting the high voltage direct current, e.g., 200 V or more higher output voltage from the fuel cell 221 on the fuel cell vehicle 220 to, for example, 200 V AC, and then converting it again to direct current on board the ship, the ship 210 can be easily propelled without modifying the fuel cell vehicle 220 system on board the ship 210. It goes without saying that the ship can be externally charged by an undescribed land grid electricity, which is conventionally done in electric-powered ships. The DC-AC inverter 218 and the AC-DC converter 218a may be installed on either the ship side or the vehicle side. That is, when both the DC-AC inverter 218 and the AC-DC converter 218a are provided on the ship side, the DC-AC inverter 218 is provided on the vehicle side. And the AC-DC converter 218a may be provided on the ship side, or both the DC-AC inverter 218 and the AC-DC converter 218a may be provided on the vehicle side.

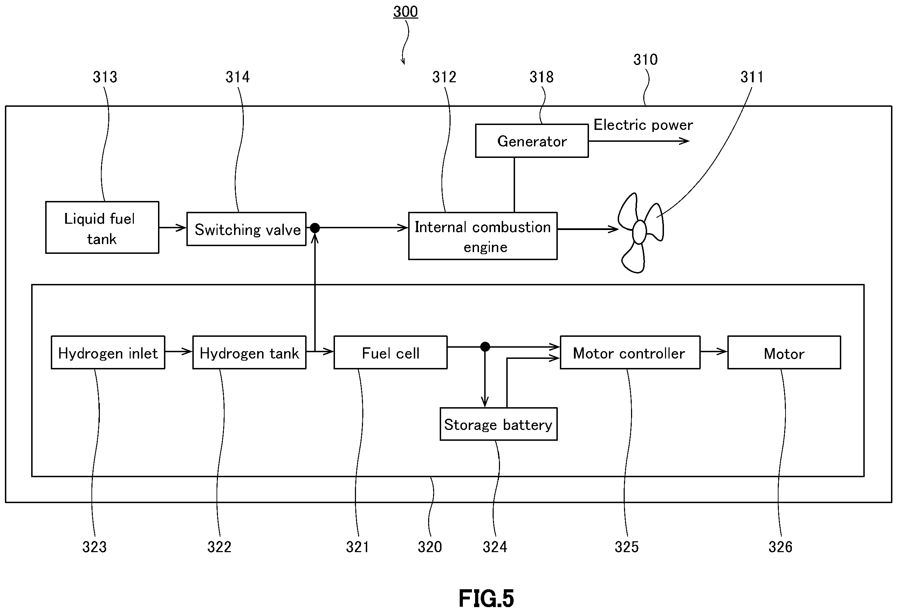

Furthermore, the ship propulsion system 100 according to one embodiment of the present invention propels the ship 110 using electricity generated from the fuel cell 121 of the fuel cell vehicle 120 loaded on the ship 110 as an energy source, but the hydrogen gas supplied to the fuel cell 121 is used to propel the ship 110 as a direct energy source. It may be done so. In addition, natural gas and LPG vehicles may be used instead of the fuel cell vehicle 100. The ship propulsion system according to other embodiments of the present invention will now be described with reference to the drawings. FIG. 5 is a block diagram illustrating the functional configuration of the ship propulsion system in accordance with other embodiments of the present invention. FIG. 5 shows the case of a fuel cell vehicle, but in the case of a natural gas vehicle and an LPG vehicle, the hydrogen tank 322 and the hydrogen inlet 323 in FIG. 5 are replaced by a natural gas tank, a natural gas inlet, and an LPG tank and LPG inlet. It goes without saying that the fuel cell vehicle-specific fuel cells 321, storage batteries 324, motor controllers 325, and motors 326 are not used in a system with a natural gas or LPG vehicle instead of a fuel cell vehicle 320.

As a ship propulsion system 300 of another embodiment of the present invention, in imparting propulsive power to the ship 310 equipped with the fuel cell vehicle 320, hydrogen stored in the fuel cell 321 of the fuel cell vehicle 320 loaded on the ship 310 is used as an energy source to impart propulsive power to the ship 310. That is, in this embodiment, hydrogen fuel in the fuel cell vehicle 320, filled at a land-based fuel supply station, is supplied directly as fuel for the internal combustion engine 312 to operate the internal combustion engine 312. The power of the internal combustion engine 312 is used to drive the ship propulsion propeller 311 to provide propulsion to the ship 310. It is characterized by the fact that the fuel cell vehicle 320 is replaced by a natural gas vehicle or LPG vehicle. In this case, instead of a fuel cell vehicle 320, a natural gas vehicle or LPG vehicle may be loaded on the ship, and these gaseous fuels may be supplied to the internal combustion engine 312 to propel the ship with the power of the internal combustion engine 312. The internal combustion engine 312, for example, is a hydrogen-fueled engine, in which case the fuel is hydrogen, or a natural gas engine in the case of a natural gas vehicle and an LPG engine in the case of a LPG vehicle.

In the present embodiment, the generator 318 is mechanically connected to the internal combustion engine 312, so that power can be generated by the generator 318 by utilizing the driving force of the internal combustion engine 312. In other words, the generator 318 comprises a system in which the internal combustion engine 312 mounted on the ship 310 generates electricity by the said gaseous fuel carried by the fuel cell vehicle 320. Thus, the power generated by the generator 318 is used to supply electricity to the various devices in the ship 310.

Thus, in the present embodiment, the ship 310 can be propelled using fuel hydrogen gas supplied to the fuel cell 321 of the fuel cell vehicle 320, or natural gas, or LPG to be installed in the ship 310 as an energy source, so that the operation of filling the ship 310 with fuel (hydrogen gas, natural gas, or LPG) and also it eliminates the need for a stand-alone fuel tank and filling facilities on the ship that is filled with the fuel. In this embodiment, the internal combustion engine 312 may be mixed with a liquid fuel comprising a petroleum fuel such as gasoline, light oil, heavy oil, or other petroleum fuel from the liquid fuel tank 313 mounted on the ship 310 via a switching valve 314 to supply fuel to said internal combustion engine 312.

In other words, in this embodiment, the propulsion propeller 311 is driven directly by the internal combustion engine 312, which is operated by using hydrogen fuel from the fuel cell vehicle 320 loaded on the ship 310, or natural gas or LPG, mixed with petroleum fuels such as gasoline, light oil, heavy oil, etc., or by the gaseous fuel alone. It will be possible to do so. In other words, the internal combustion engine 312 is operated by installing a fuel cell vehicle 320 or other vehicle filled with fuel (gasoline, diesel oil, heavy oil, etc.) at a land-based fuel supply station on board a ship 310 and using the filled fuel to mix it with petroleum fuel such as light oil, or by using hydrogen gas, natural gas, or LPG alone as fuel. The power of the engine directly drives the ship propulsion propeller 311, which allows the ship 310 to navigate. Since the components of the fuel cell vehicle 320 in the ship propulsion system 300 and its action are the same as those in the ship propulsion system 100 in one embodiment of the present invention, the description of the fuel cell vehicle 320 will be omitted.

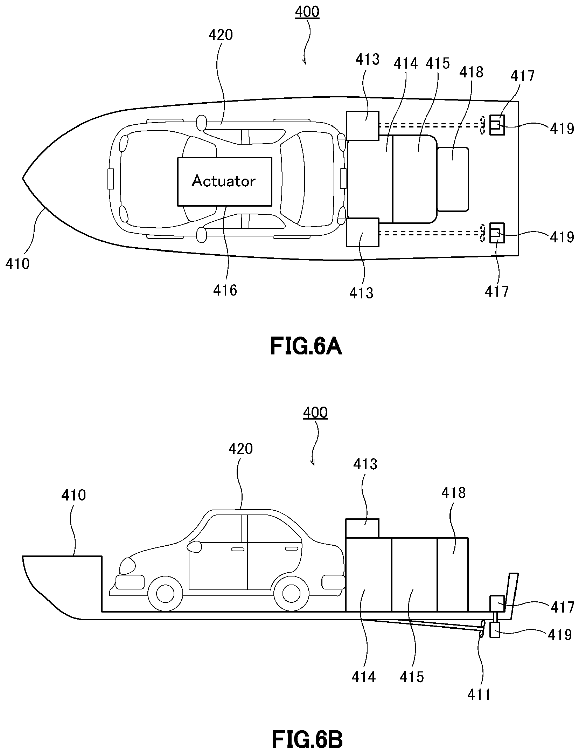

As shown in FIGS. 6A and 6B, in the ship propulsion system 400, the ship 410 is further provided with an autopilot 419, and an actuator 416 to operate the steering of the autopilot 419 can be mounted on a fuel cell vehicle or a natural gas vehicle or an LPG vehicle or an electric vehicle 420. In this way, the space of the vehicle may be effectively used and the vehicle-mounted equipment may be used together.

In this embodiment, as shown in FIGS. 6A and 6B, a fuel cell vehicle 420 is loaded on the forward side of the ship 410, and a ship propulsion motor 413 and a ship propulsion motor controller 414 that drives the ship propulsion propeller 411 behind the fuel cell vehicle 420, a ship-mounted storage battery 415, an auxiliary generator 418, a steering control unit 417 and the autopilot 419 to control the rudder, respectively. By configuring the actuator 416 having a remote-control function for remotely controlling the motor and steering of the ship 410 to be mounted on a vehicle such as the fuel cell vehicle 420, the steering operation can be performed from inside the vehicle of the fuel cell vehicle 420. The vehicle mounting method described herein is an example only, and the embodiments thereof do not unreasonably limit the contents of the invention as described in the claims.

By doing so, the space of the vehicle itself, such as the fuel cell vehicle 420, can be used as a cabin or control room of the ship 410. In addition, inside the vehicle itself, such as the fuel cell vehicle 420, the wipers, defroster, navigation facilities, etc. provided in the vehicle can be used even in rainy weather, making it easier to steer the vehicle on the ship 410. In addition, the air conditioning system of the vehicle itself, such as the fuel cell vehicle 420 can be used to operate in a more comfortable environment.

That is, the autopilot 419 of the ship 410 can be operated by the operation unit 416 having a remote-control function for remotely controlling the engine and steering of the fuel cell vehicle 420 loaded on the ship 410, so that the space and facilities of the fuel cell vehicle 420 itself can be effectively utilized. As vehicles loaded on the ship 410, with respect to the operation unit 416 remotely controlling the engine and steering of the ship 410 in this embodiment, the operation unit 416 can also be applied to electric vehicles, liquid fuel engine vehicles, and the like, other than fuel cell vehicles.

Furthermore, the cycle of loading from the fuel cell vehicles 120, 220, 320, and 420 may be repeated to provide an energy source to the ships 110, 210, 310, and 410 in the ship propulsion system 100, 200, 300, 400 for each of the aforementioned embodiments of the invention, after filling the hydrogen tanks 122, 222, and 322, which are fuel tanks of the fuel cell vehicles 120, 220, 320, and 420. In addition, natural gas and LPG vehicles may be installed instead of fuel cell vehicles to perform the same fuel supply cycle operation.

For example, one commercially available fuel cell vehicle with 5kg of hydrogen on board has a thermal energy content of approximately 165kWh, which means that if the efficiency of the fuel cell is assumed to be about 50%, it will carry approximately 80kWh of electrical energy. Therefore, if the length of the ship is about 10m, a single fill-up of hydrogen in a fuel cell vehicle will enable it to travel at 8km/h for about 8 hours. Therefore, to achieve even longer navigation, more power can be secured for the propulsion of the ship via repeated loading of the fuel cell vehicle and increased capacity of the ship-mounted battery 215.

In other words, the ship may be equipped with a large-capacity storage battery, and while the ship is at anchor, the storage battery mounted on the ship may be recharged by repeated round trips between the hydrogen refueling station and the ship in question. It goes without saying that, if the vehicle is a natural gas vehicle, the vehicle may go to and from the natural gas filling station, and if the vehicle is an LPG vehicle, the vehicle may go to and from the LPG filling station. At this time, in charging from the vehicle to a ship at anchor, the vehicle may not be loaded on the ship and may be charged from the land near the ship, in the same way as charging using grid power from land, which has been done in the past. In addition, the fuel cell vehicle or natural gas vehicle or LPG vehicle may not be on board the ship when the ship leaves the port after the required amount of charging has been completed by the vehicle.

Thus, the fuel cell vehicles 120, 220, 320, and 420, which use hydrogen as power for propulsion of the ship and for powering the ship's auxiliary equipment, disembark and fill up with hydrogen again at a hydrogen filling station on land, and then board the ship 110, 210, 310, and 410 to power the ship as a fuel cell ship. Through the repeated loading of fuel cell vehicles, more power can be ensured for the propulsion of the ship. The same is true if the vehicle is a natural gas or LPG vehicle.

In the ship propulsion system 100, 200, 300, 400 in each of the aforementioned embodiments of the invention, the energy source of the fuel cell vehicles 120, 220, 320, 420 loaded on the ships 110, 210, 310, and 410 is used for the propulsion drive of said ships, but the vehicles loaded on the ships are not limited to fuel cell vehicles, but can also be applied to electric vehicles, hybrid vehicles, plug-in hybrid vehicles, and normal vehicles powered by natural gas, LPG, and liquid fuel engines.

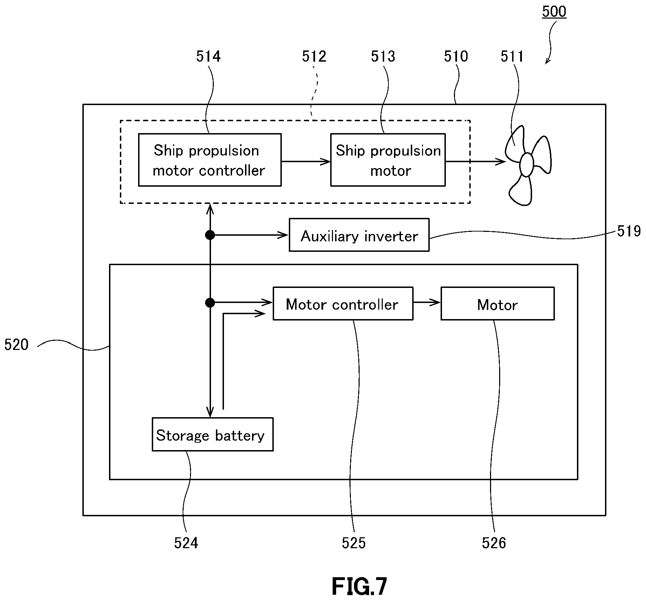

For example, as shown in FIG. 7, in the ship propulsion system 500 pertaining to yet another embodiment of the invention, the vehicle 520 loaded on the ship 510 is an electric vehicle in which the vehicle-side drive source is an electric motor 526. In this embodiment, the electric power stored in the storage battery 524 mounted on the electric vehicle 520 is supplied directly to the motor controller 514 for ship propulsion of the ship-side drive 512 of the ship 510, thereby driving the ship propulsion propeller 511 via the motor 513 for ship propulsion. In other words, in this embodiment, by directly using the storage battery 524 mounted on the electric vehicle 520 as an energy source, the electric power necessary for propulsion of the ship 510 can be reliably secured in this embodiment. In the present embodiment, the auxiliary power such as the control power supply is provided via the inverter 519 for the auxiliary equipment provided on the ship 510 side.

In this embodiment, a large-capacity storage battery may be mounted on the ship 510, and the storage battery mounted on the ship 510 may be recharged by repeated round trips between the electric vehicle filling station and the ship concerned while the ship 510 is at anchor. At this time, in charging the electric vehicle 520 to the ship 510 at anchor, the electric vehicle 520 may be charged from the land in the vicinity of the electric vehicle 520 without loading the electric vehicle 520 on the ship 510. This eliminates the need for a fast-charging station to be equipped at the ship's anchorage, thereby increasing the utility of the electric ship. When the ship 510 departs from a port, after the required amount of charging is completed by the vehicle, the electric vehicle 520 may not be loaded without on the ship 510.

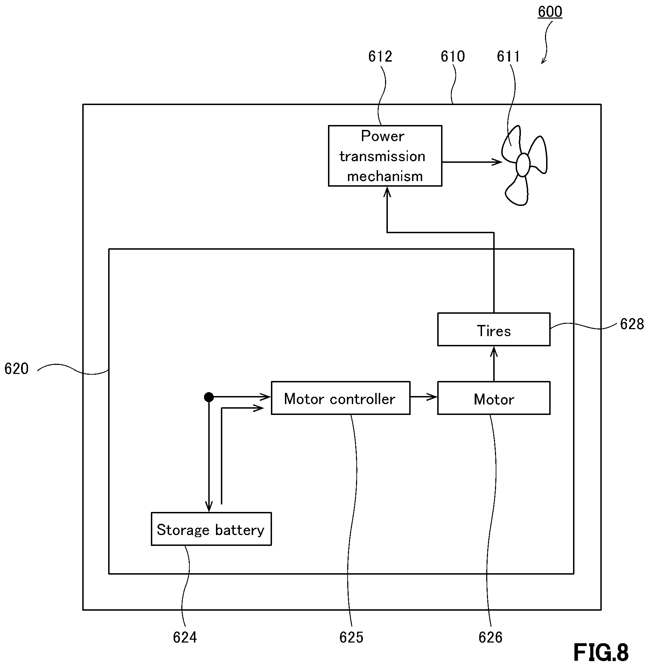

As shown in FIG. 8, the ship propulsion system 600 pertaining to yet another embodiment of the present invention uses the rotational force of the tires 628, which are driven by the motor 626, which serves as the motor 626 that drives the electric vehicle or hybrid vehicle, plug-in hybrid vehicle, and fuel cell vehicle 620 on the vehicle side, to propel the ship 610. The propeller 611 may be rotatably driven. Specifically, the power transmission mechanism 612 comprising gears, cams, and the like can function as a ship-side drive unit to drive the ship propulsion propeller 611 rotationally, and the rotational force of the tires 628 of the electric vehicle 620 can be transmitted directly to the ship propulsion propeller 611 to ensure propulsion power of the ship 610.

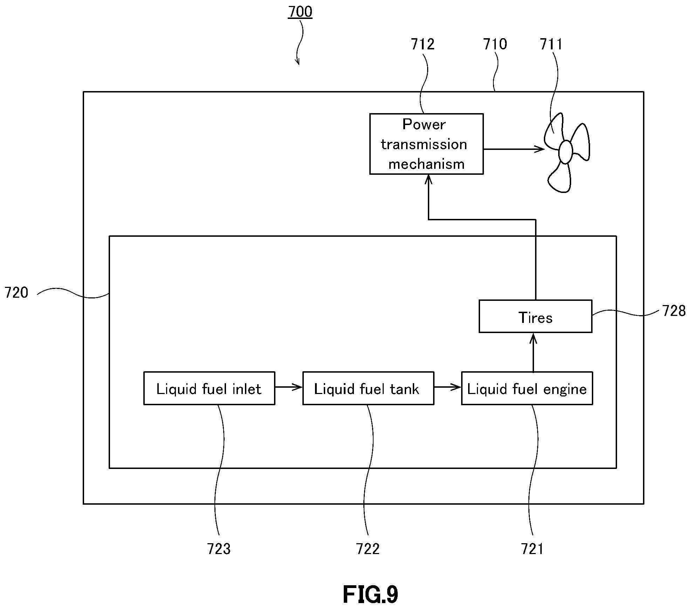

Furthermore, as shown in FIG. 9, in the ship propulsion system 700, when an automobile 720 with a liquid fuel engine 721 driven by a liquid fuel such as gasoline as the automobile-side drive source is mounted on the ship 710, the rotational force of the tires 728 rotatably driven by the liquid fuel engine 721 is used to drive the ship 710. The ship propeller 711 is rotatably driven by the ship propulsion propeller 711. Specifically, a power transmission mechanism 712 comprising gears, cams, and the like functions as a ship-side drive unit to drive the ship propulsion propeller 711 rotationally, and transmits the rotational force of the tires 728 of the automobile 720 directly to the ship propulsion propeller 711, thereby ensuring the propulsive force of the ship 710.

As described above, according to each embodiment of the present invention, the ship can be propelled by the energy imparted by the vehicle-side drive source, such as a fuel cell vehicle loaded on a ship, or by the power transmission of the vehicle-side mechanical drive source, so that the ship can be propelled by filling the ship with hydrogen gas or the fuel tank filled with said hydrogen gas. No such installation is required.

In other words, each embodiment of the present invention eliminates the need to install expensive hydrogen filling stations for individual ships, compared to the conventional method of constructing a fuel cell ship with high-pressure hydrogen tanks, fuel cells, and storage batteries mounted separately. The penetration rate of fuel cell vehicles is much higher than that of fuel cell ships. By using the energy source directly from the fuel cell vehicle, it will be possible to provide a low-cost marine propulsion system with a high level of convenience not available with conventional fuel cell ships. The same benefits can be achieved for electric, hybrid and plug-in hybrid vehicles.

As a result, it will be possible to make a breakthrough in the spread of fuel cell ships, which are currently slow to spread, and to provide the world with clean hydrogen propulsion ships that do not emit exhaust gases, resulting in the mass spread of electrically powered ships that are both comfortable and highly efficient. Thus, the ship propulsion system according to each embodiment of the present invention is expected to make a significant contribution to the future new development of the ship-related industry, and thus has extremely great industrial value.

Although each embodiment of the invention has been described in detail above, it will be readily apparent to those skilled in the art that many variations are possible without departing substantively from the novelties and effects of the invention. Accordingly, all such variations shall be included within the scope of the present invention.

For example, a term described at least once in the specification or drawings with a broader or more synonymously different term may be replaced by that different term anywhere in the specification or drawings. The configuration and operation of the ship propulsion system is also not limited to those described in the various embodiments of the invention, but can be implemented in various variations.

### Glossary of Drawing References

- 100, 200, 300, 400, 500, 600, 700: Ship propulsion systems
- 110, 210, 310, 410, 510, 610, 710: Ships
- 111, 211, 311, 411, 511, 611, 711: Ship propulsion propellers
- 112, 212, 512: Ship-side drives
- 113, 213: Ships propulsion motors
- 114, 214, 414, 514: Ship propulsion motor controllers
- 119, 219, 519: Auxiliary inverters
- 120, 220, 320, 420: Vehicles (fuel cell or natural gas or LPG vehicles)
- 121, 221, 321: Fuel cells
- 122, 222, 322: Hydrogen Tanks
- 124, 224, 324, 524, 624: Storage batteries
- 126, 226, 326, 526, 626: Motors
- 215, 415: (shipboard) storage batteries
- 216: Storage battery voltage detector
- 217: Relay unit
- 218: DC-AC inverter
- 218a: AC-DC converter
- 312: Internal combustion engine
- 416: actuator
- 520, 620: Automobiles (electric vehicles)
- 612, 712: power transmission mechanism
- 720: Automobiles (liquid fuel engine vehicles)

## Claims

1. A ship propulsion system for loading an automobile on a ship and imparting propulsive power to the ship using fuel mounted on the automobile, comprising: a ship-side drive unit provided on the ship to generate driving force by means of a rotation drive, and a ship-side drive unit to impart propulsive power to the ship by transmitting said driving force generated by said ship-side drive unit. The system includes a propulsion propeller or a jet propulsion pump, wherein the ship-side drive unit drives the ship propulsion propeller or the jet propulsion pump by imparting energy from an automobile-side drive source mounted on the automobile, or by power transmission from the automobile-side drive source.

2. The ship propulsion system of claim 1, wherein the vehicle is a fuel cell vehicle equipped with a fuel cell, wherein the energy source of the vehicle side drive source is hydrogen onboard the fuel cell vehicle, and wherein the ship propulsion system is driven by electric power generated by the fuel cell, wherein the ship side drive unit has a ship propulsion propeller a ship propulsion motor to be driven by rotation, and a motor controller for ship propulsion, wherein said power generated from the fuel cell is supplied to control the rotational drive operation of the motor for ship propulsion, and wherein said motor for ship propulsion is configured to be able to be driven directly using a motor controller mounted on the fuel cell vehicle.

3. The ship propulsion system as claimed in claim 1, **characterized in that** the ship is driven as an electric ship wherein the ship is equipped with a marine propulsion motor and a marine propulsion motor controller that controls the rotational drive operation of the marine propulsion motor, by supplying the electric energy to the ship from the vehicle, where is an electric vehicle or a hybrid vehicle with a storage battery in the vehicle, which is stored in a storage battery of the electric vehicle, hybrid vehicle, or plug-in hybrid vehicle loaded on the ship.

4. The ship propulsion system according to claim 2 or claim 3, wherein the auxiliary power supply for auxiliary equipment that serves as a voltage converter of power generated from the fuel cell vehicle or electric vehicle or hybrid vehicle or plug-in hybrid vehicle on-board power between the vehicle and the motor controller for ship propulsion. The inverter is provided on said ship.

5. The ship propulsion system according to any one of claims 2 to 4, wherein, between the vehicle and the motor controller for ship propulsion, the power generated from the fuel cell vehicle, or the stored electricity in the electric vehicle or hybrid vehicle or plug-in hybrid vehicle onboard power is converted from DC to AC by a DC-AC inverter and from AC to DC by an AC-DC converter that further converts the power converted to AC to DC are provided.

6. The ship provides the ship propulsion system as claimed in claim 2, further comprising a storage battery for storing electric power supplied from the fuel cell vehicle, a storage battery voltage detection unit for detecting the voltage of the storage battery, a relay device for charging control that is operated based on the detection result of the storage battery voltage detection unit, and a charging control device for the fuel cell vehicle, and it is by the fact that after recharging the battery by the fuel cell vehicles, it is characterized to be able to propel the ship using the marine propulsion motor by the use of the power stored in the storage battery.

7. The ship propulsion system of claim 1 to drive the ship propulsion propeller or the jet propulsion pump, wherein the vehicle is a fuel cell vehicle or a natural gas vehicle or an LPG vehicle, and the ship-side drive unit is an internal combustion engine mounted on the ship, and the fuel of the internal combustion engine is hydrogen mounted in the fuel cell vehicle or a natural gas mounted in the natural gas vehicle, or an LPG mounted in the LPG vehicle.

8. The ship propulsion system of claim 7, wherein the internal combustion engine is a gas engine fueled by hydrogen or natural gas or LPG, and wherein the hydrogen or natural gas or LPG is mixed with liquid fuel on board the ship for combustion operation.

9. The ship propulsion system equipped with an automobile according to claim 1, wherein the automobile is an electric vehicle or a hybrid vehicle, or a plug-in hybrid vehicle, or a fuel cell vehicle, wherein the automobile-side drive source is an electric motor, and wherein the ship-side drive unit is for ship propulsion that rotates and drives the ship propulsion propeller, and the motor and the motor controller for ship propulsion that controls the rotational drive operation of the motor for ship propulsion by the supply of electricity stored in the electric vehicle or hybrid vehicle, or plug-in hybrid vehicle, or fuel cell vehicle, and the motor controller for ship propulsion being provided with an electricity, and it is **characterized by** the fact that the system consists of an electrical energy source generated or installed in an automobile or hybrid vehicle, or a plug-in hybrid vehicle, or a fuel cell vehicle, directly connected to the system as DC or converted from DC to AC.

10. The ship propulsion system according to claim 1, wherein the motor vehicle is a motor vehicle, wherein the motor vehicle side drive source is either an electric motor or a liquid fuel engine, and wherein the marine side drive is a power transmission mechanism that transmits the rotational force of the tires of the motor vehicle directly to the marine propulsion propeller.

11. The ship propulsion system according to any one of claims 1 to 10, wherein the ship is further provided with a remote-control function for remotely controlling the engine and the steering, and an operation unit for operating the steering by the remote-control function can be mounted on the vehicle.
